# EUROPEAN PATENT APPLICATION

(11) **EP 2 611 064 A1**
(43) Date of publication of application: **03.07.2013**
(21) Application number: 11306804.3
(22) Date of filing: 29.12.2011
(51) Int. Cl.: H04L 9/18, H04N 7/167, H04N 21/2347, H04N 21/4405, H04N 21/235

(54) **Method for selectively scrambling bit-streams**

(71) Applicant: Thomson Licensing, 92130 Issy-les-Moulineaux (FR)
(72) Inventor: Robert, Antoine, 35576 CESSON SEVIGNE (FR); Lefebvre, Frédéric, 35576 CESSON SEVIGNE (FR); Chupeau, Bertrand, 35576 CESSON SEVIGNE (FR)
(74) Representative: Huchet, Anne

(57) **Abstract**

The invention relates to a method for selectively scrambling a coded bit-stream, the method comprising a step of determining at least one modifiable part in the coded bit-stream, wherein the compliance, regarding a coding standard, of a modified coded bit-stream comprising an alternative modifiable part is not affected; a step of selecting at least one modifiable part, wherein the rendering of a compliant modified coded bit-stream comprising selected alternative modifiable part is perceptually affected compared to the rendering of the coded bit-stream; a step of substitution, for each of the at least one selected modifiable part, of original modifiable part in the coded bit-stream by alternative modifiable part resulting in a compliant selectively scrambled bit-stream. The invention also relates to associated method for descrambling.

## Description

### Field of the invention

The invention relates to content protection. More particularly the invention relates to a method for selectively scrambling a coded bit-stream.

### Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It has long been known to protect content by encryption, notably in conditional access television system or in Digital Rights Management (DRM) system. Thus, content is encrypted using one or more encryption keys.

More recently, selective encryption has been designed to cope with performance issues of standard encryption. A part of the content is selectively encrypted such that the decryption of that part of the content is absolutely mandatory to decode content in view of full rendering of it to a user. The patent application EP2141923 filed on 30/06/2008 in the name of Thomson Licensing entitled "Methods and apparatuses for selective data encryption" describes a selective encryption algorithm which presents the same security level as standard encryption. An advantage of selective encryption method is to allow encryption with a key dedicated to each user at a much lower cost in term of real-time resources of the server than standard encryption method. However the algorithm for selecting part of the content to encrypt may alter the compliance of the compressed stream inhibiting any rendering and causing the video decoder to crash.

A method for generating a protected bit-stream with the performance of selective encryption algorithm wherein the resulting protected bit-stream remains compliant with the decoding process by just affecting the rendering is therefore needed.

### Summary of the invention

The purpose of the invention is to overcome at least one of the disadvantages of prior art by proposing a method for scrambling a coded bit-stream which does not modify the compliance of the bit-stream. The idea of the invention is to modify original parts of a coded bit-stream such as to perceptually affect the rendering of the modified content but not the compliance as regard as the coding format. The original parts of the bit-stream encrypted by a standard encryption method are provided for descrambling of the modified bit-stream.

Scrambling is the process of rendering the sound, pictures and data unintelligible. After descrambling, any defects or artefacts on the sound, pictures or data should be imperceptible. Therefore, by scrambling content, one should understand in a general way, generating a content for which the rendering is perceptually affected compared to the original content so that the user can not bear it. Original parts, and advantageously decryption keys when the original parts are encrypted, are therefore needed by the user for the descrambling process in order to enjoy the rendering of the descrambled content.

To this end, the invention relates to a method for selectively scrambling a coded bit-stream comprising a step of determining at least one modifiable part in the coded bit-stream, wherein the compliance, regarding a coding standard, of a modified coded bit-stream comprising alternative modifiable part is not affected; a step of selecting at least one modifiable part, wherein the rendering of a compliant modified coded bit-stream comprising alternative modifiable part is perceptually affected compared to the rendering of the original coded bit-stream; a step of substitution, for each of the at least one selected modifiable part, of the original modifiable part in the coded bit-stream by the alternative modifiable part resulting in a compliant selectively scrambled bit-stream.

The invention is advantageously well adapted to generate a compliant scrambled bit-stream which will not disrupt the decoder.

According to a particularly advantageous characteristic of the invention, the step of selecting at least one modifiable part comprises computing a metric representing the perceptibility of artifacts after rendering between the compliant modified coded bit-stream and the original coded bit-stream. The metric is computed according to at least one function among a set of functions, the set of functions comprising PSNR, SSIM, MSE.

According to a particularly advantageous characteristic of the invention, the step of selecting at least one modifiable part is further controlled by a determined criterion, the criterion being specific to an application. Such characteristic of the invention proposes a solution for generating a bit-stream controlled by the application requirement for instance, scrambling only the higher part of the picture. It is thus possible to control the spatial and temporal extent of scrambling and the intensity of the degradation due to the scrambling.

In a first preferred embodiment, the step of determining at least one modifiable part in the coded bit-stream further comprises using a watermarking algorithm on the original coded bit-stream. According to a particularly advantageous characteristic of the invention, the length of the coded bit-stream and the length of the compliant selectively scrambled bit-stream are identical.

In a second preferred embodiment, the method further comprises a step of delivering metadata, the metadata comprising the original modifiable part of the coded bit-stream and the position in the bit-stream for each of the at least one selected modifiable part. According to a particularly advantageous characteristic of the invention, the step of delivering metadata further comprises a step of encrypting metadata. According to other particularly advantageous characteristics, a first set of metadata is encrypted using a first key and a second set of metadata is encrypted with a second key. The characteristic advantageously provides some kind of scrambling scalability.

According to other particularly advantageous characteristics, the step of delivering metadata comprises a step of multiplexing metadata into the compliant modified bit-stream. In a variant wherein the bit-stream is a H.264 coded bit-stream, the step of multiplexing comprises insertion of the encrypted metadata into SEI message of the compliant modified bit-stream.

In a third preferred embodiment, the bit-stream is a H.264 CABAC coded bit-stream and the modifiable part of the bit-stream is a syntax element.

In a fourth preferred embodiment, the bit-stream is a H.264 CAVLC coded bit-stream and the modifiable part of the bit-stream is a syntax element.

According to another aspect, the invention also relates to method for descrambling a selectively scrambled bit-stream wherein the selectively scrambled bit-stream comprises at least one modified part; wherein the selectively scrambled bit-stream is compliant regarding a coding standard and wherein the rendering of the selectively scrambled bit-stream is perceptually affected compared to the rendering of the descrambled bit-stream. The descrambling method comprises a step of receiving metadata, the metadata comprising an original part of the bit-stream and a position in the bit-stream for each of the at least one modified part of the selectively scrambled bit-stream; a step of determining the at least one modified part of the selectively scrambled bit-stream according to the received position; a step of substitution of the at least one modified part by the received original part resulting in a descrambled bit-stream.

Any characteristic or embodiment described for the scrambling method is compatible with the descrambling method.

### Brief description of the drawings

Other characteristics and advantages of the invention will appear through the description of a non-limiting embodiment of the invention, which will be illustrated, with the help of the enclosed drawings.
- **Figure 1** represents the method of scrambling a coded bit-stream according to a first embodiment,
- **Figure 2** represents the method of scrambling a coded bit-stream according to a second embodiment,
- **Figure 3** represents the original coded bit-stream and the protected/scrambled coded bit-stream according to a particular embodiment,
- **Figure 4** represents the method of descrambling a bit-stream according to a particular embodiment.

### Detailed description of preferred embodiments

As an illustrative example, the following description will be directed to protection of electronic content, such as those compressed for optimizing distribution. By content, it should be understood any film, music, text or video game.

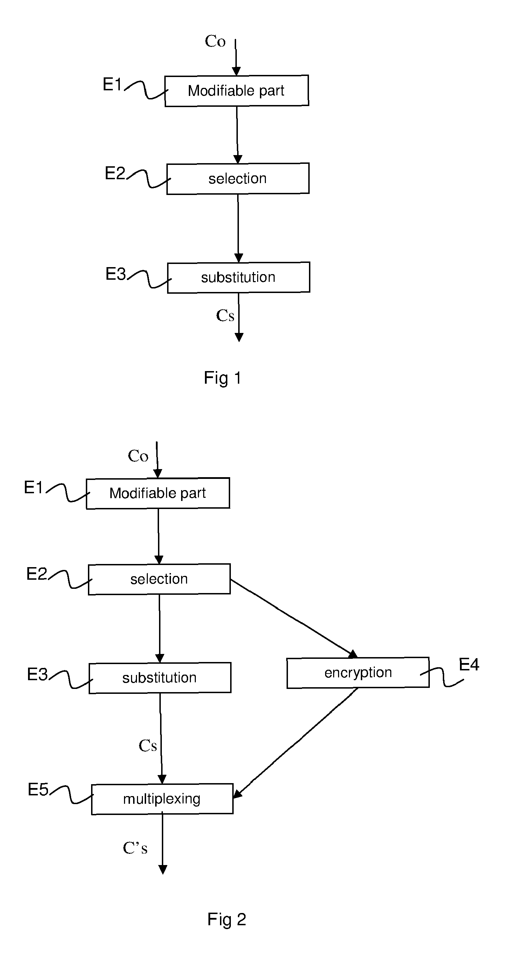

**Figure 1** represents the method of scrambling a coded bit-stream according to a particular embodiment.

The method according to the described embodiment modifies a coded bit-stream. A stream carrying an electronic content is compressed by coding resulting in a coded bit-stream. Among coding standard, the invention is compliant with MPEG-2, MPEG-4, H.264/AVC or VC-1 bit-streams including compressed audio content, compressed 3D data.

In a step E1, potentially modifiable parts in the coded bit-stream are determined such that the decoding process is not affected for the modified bit-stream. Such a modified bit-stream, wherein the values in the bit-stream for modifiable parts are replaced by alternative values, remains compliant with the coding standard. According to a variant, the patent application WO 2008/118145 filed on 02/11/2007 in the name of Thomson Licensing entitled "Modifying a coded bitstream" describes a method for modifying an entropy coded bit-stream. The method comprises some partial decoding and re-encoding stages to determine potentially modifiable parts of coded bit-streams adapted to carry watermark information. In case of H.264 video stream, the method comprises searching for modifiable CABAC syntax elements. Thus the method comprises searching for modifiable bypassed part of motion vector differentials of some blocks of inter predicted images. The coded bit-stream is partially decoded until finding the acceptable syntax elements. Modified syntax elements are then CABAC re-encoded to select those which do not affect the compliance of the bit-stream. According to another variant, a method comprising partial decoding stages of some arbitrary modified bit-streams in order to check the compliance of the bit-stream is compatible with the invention. In this variant, the length of the bit-stream is natively preserved.

In a step E2, visual impacts on the decoded compliant modified bit-stream are evaluated for each potentially modifiable part. The visual impacts or artifacts are measured between the rendering of the original bit-stream and the rendering of the modified bit-stream. The skilled in the art of image processing will appreciate that known algorithms for measuring the similarity between two images at least comprise peak signal-to-noise ratio (PSNR), means squared error (MSE) and structural similarity (SSIM) index. The SSIM index is a full reference metric, in other words, the measuring of image quality is based on an initial uncompressed or distortion-free image as reference. SSIM is designed to improve traditional methods like peak signal-to-noise ratio (PSNR) and mean squared error (MSE), which have proved to be inconsistent with human eye perception. According to this variant, a measure based on pixels value of the decompressed bit-stream is computed for each picture the bit-stream. In the variant PNSR and MSE, the luminance of determined blocks is computed for each block of the picture for both original and modified bit-streams. According to another variant, the measure is based on both luminance and chrominance. A metric representing the perceptibility of artifacts after rendering between the compliant modified coded bit-stream and the original coded bit-stream is computed with cited algorithms. One should notice that either one or several of these functions are used for a metric computation and that some aggregations of the results are done to define a particular metric. Then an application based determined criterion allows to select modifiable parts that have the desired visual impacts, i.e preserving the channel logo or an advertisement but hiding the rest of the images. Other variant of applications may be adapted to alter the higher or lower part of the images, to alter only the characters in the image. Selecting modifiable parts may lies in selecting parts that have the highest visual impacts i.e. that alter the most the rendering. Such algorithms may be implemented in a watermarking algorithm applied to the compressed bit-stream wherein the watermarks involving the most visible artifacts among the set of watermarks are selected as modifiable parts of the bit-stream adapted for selective scrambling. At the output of the step E2, in the variant of the H.264 bit-stream, a set of original syntax elements associated to the original parts of the coded bit-stream and associated to the positions of modifiable parts in the bit-stream are determined for the original bit-stream. Besides a set of alternative syntax elements associated to alternative modified parts of the bit-stream are further determined. When inserted in the original bit-stream at the determined position, alternative modified parts highly alter the rendering of the content after decoding through the modification of the syntax elements while not affecting the compliance of the decoding process. One should notice, that for each modifiable part, a plurality of alternative parts is possible that do not affect the compliance of the bit-stream but alter the rendering of it. Each of the alternative parts for a determined modifiable part affects the rendering with a variable level of perceptibility. The level of perceptibility induced by each of the alternative parts for a determined modifiable part may not be high enough. The modifiable part is then not selected since none of the alternative parts complies with the selection criteria. On the contrary, when several alternative parts results in a level of perceptibility higher enough, one alternative part among the several alternatives parts complying with the selection criteria is selected. Therefore the selection step comprises the determination of both a modifiable part and an alternative part associated to that modifiable part.

In a step E3, the substitution of original parts by alternative parts is performed for each selected modifiable parts. Alternative parts are directly inserted in the H.264 output stream instead of original ones at the determined positions.

**Figure 2** represents the method of scrambling a coded bit-stream according to a second embodiment. The first steps E1, E2 and E3 are identical to the first embodiment. The second embodiment comprises further steps of encrypting and multiplexing original data for descrambling.

In a supplementary step E4, original values and positions of modifiable parts are encrypted by some encryption method. Original value and position of each of the modifiable parts are metadata outputted from step E3 and associated to the modified bit-stream. Advantageously, only very small parts of the original bit-stream are encrypted while the decoding the stream without recovering encrypted metadata highly impacts perceptual rendering. The skilled in the art will appreciate that original values and positions are concatenated and block ciphered. Thus the requirement of cipher length to guarantee security of the data is satisfied. In a refinement, the original value is encrypted with a first key and an alternative value causing artifacts less perceptible than artifacts caused by the modified part value is encrypted using a second key. In a further refinement, metadata comprises, for a position determining a part of the bit-stream, original value encrypted by a key and several alternative values each encrypted with a different key. This variant allows some scrambling scalability by providing a content with different levels of rendering quality, each level protected by a dedicated key. According to his credential, a client will enjoy a determined level through a determined key function of the client credential. This variant also allows providing a content for different targets. According to his status, for instance adult or children, a client will be entitled to see a scene presenting sex or violence whose seeing is limited to adults while the other scenes of the content are fully descrambled.

In a step E4, the encrypted metadata are delivered with the modified bit-stream to a client for descrambling purpose. According to different embodiments, the encrypted metadata are multiplexed at the transport stream level or directly at the bit-stream level, the encrypted metadata are directly sent to the client trough a secure channel. In a variant, metadata are packetized in SEI messages and added in the H.264 output stream C'ₛ. Advantageously, these encrypted metadata when directly stored in the stream neither modify the compliance of the bit-stream.

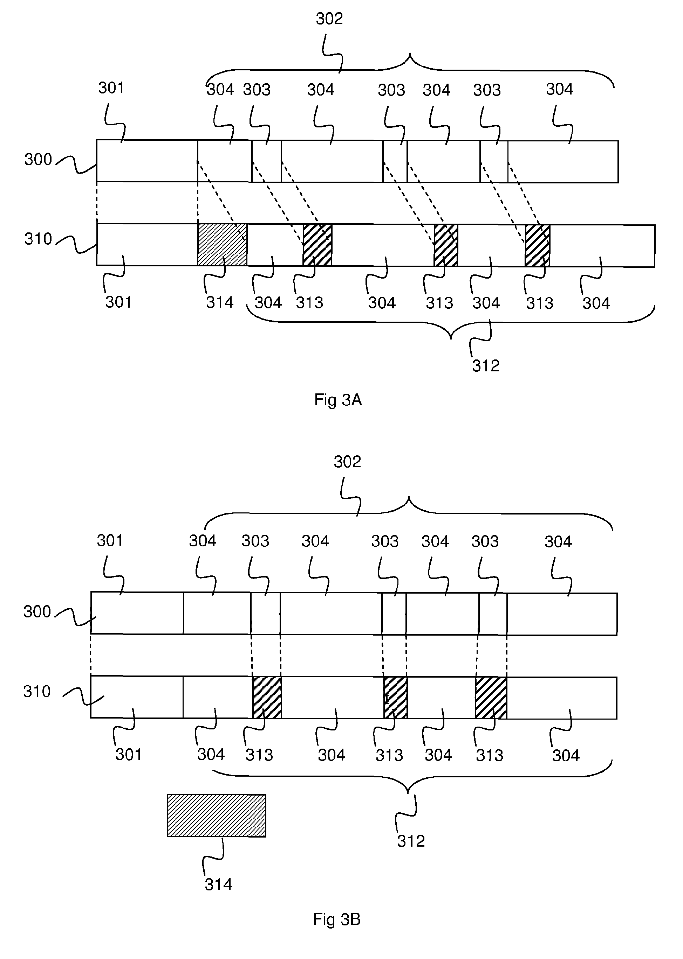

**Figure 3A and figure 3B** represent the original coded bit-stream 300 and a protected/scrambled coded bit-stream 310 according to particular embodiments wherein the metadata are transmitted in-band or out-of-band.

In the figure 3A, a sequence of the original bit-stream 300 is represented. The original bit-stream 300 comprise a header 301 followed by frame 302 among which modifiable part 303 are identified. In the modified bit-stream 310, the values of original modifiable parts 303 are replaced with the alternative values 313, while the header 301 and the remaining parts 304 of the frame 302 remains unchanged. In a variant represented on figure 3A, encrypted metadata 314 are inserted in a message of a coded bit-stream. In a variant represented on figure 3B, encrypted metadata 314 are external to the bit-stream 310. For instance, metadata 314 are transferred in a separated file.

In a particular embodiment, the entropy code is an arithmetic code and, more specifically, the arithmetic coding scheme known as Context-based Adaptive Binary Arithmetic Coding (CABAC) is used. CABAC is widely used in the H.264/AVC standard. In this particular embodiment, metadata 314 are inserted in SEI message of a H.264 coded bit-stream.

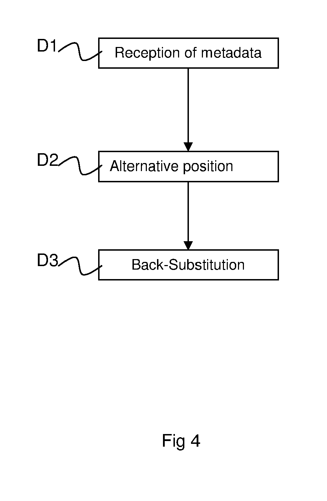

**Figure 4** represents the method of descrambling a bit-stream according to a particular embodiment.

In a step D1, metadata comprising original parts of the coded bit-stream and positions in the stream of the alternative modified parts are received. One should notice that the metadata are either recovered from SEI message, or from a secure channel or from a separated file. According to a preferred embodiment where the metadata are encrypted, the step of receiving metadata further comprises the decryption of metadata.

In a step D2, the position in the stream of each of the alternative modified parts is determined according to the received position.

In a step D3, each of the alternative parts in the coded bit-stream are substituted by received original parts thus producing the compliant original bit-stream.

Thus at the decoding stage, without the encryption key, multiplexed or external encrypted metadata are skipped, the modified bit-stream is read affecting the visual quality but not compromising the decoding process. While with the encryption key, multiplexed or external metadata are decrypted, substitutions according to this information are made; advantageously the rendered bit-stream is the original one. In a variant, not the original part, but some other alternative parts are used for the substitution thus not conducting to the quality of the original bit-stream but to some intermediate degradation level.

Unlike in selective encryption algorithm, where parts of the coded bit-stream are encrypted and directly inserted in the bit-stream thus removing information, in the method for selectively scrambling, some information (alternative parts) remains in the bit-stream which could make easier the reconstruction of the original bit-stream without the decryption key. However, the position in the bit-stream of alternative parts is a real challenge without knowing the position from the encrypted metadata. The level of security of the method of selectively scrambling is therefore satisfactory. Besides, the skilled in the art of cryptography will appreciate that a class attack is not possible for a selectively scrambled bit-stream of the invention because the hacker will miss a reference bit-stream for comparison. Indeed since the stream is compliant, it is very difficult to isolate all modified parts (positions, sizes) without a reference stream. In addition the modifications are dependent on the bit-stream then do not follow precise rules, for instance regarding periodic modification. Finally, the hacking will have to be repeated for each modifiable part.

Naturally, the invention is not limited to the embodiments previously described.

In particular, the invention is compatible with any method of searching some alternative parts of coded bit-stream to modify a precise part of the decoding and could be generalized to all other compressed contents (such as MPEG-2, MPEG-4, VC-1 bit-streams) including compressed audio content, compressed 3D data.

Finally, the invention is compatible with any standard encryption method and key management process.

## Claims

1. Method for selectively scrambling a coded bit-stream (Cₒ) **characterized in that** the method comprises:
- a step (E1) of determining at least one modifiable part in the coded bit-stream, wherein the compliance, regarding a coding standard, of a modified coded bit-stream comprising an alternative modifiable part is not affected;
- a step (E2) of selecting the at least one modifiable part, wherein the rendering of a compliant modified coded bit-stream comprising the alternative modifiable part is perceptually affected compared to the rendering of the coded bit-stream (Cₒ);
- a step (E3) of substitution, for each of the at least one selected modifiable part, of the original modifiable part in the coded bit-stream by the alternative modifiable part resulting in a compliant selectively scrambled bit-stream (C_{S}).

2. Method according to claim 1 wherein the step (E2) of selecting the at least one modifiable part comprises computing a metric representing the perceptibility of artifacts after rendering between the compliant selectively scrambled bit-stream (C_{S}) and the coded bit-stream (Cₒ).

3. Method according to claim 2 wherein the metric is computed according to at least one function among a set of functions, said set of functions comprising PSNR, SSIM, MSE.

4. Method according to any of claims 1 to 3 wherein the step (E2) of selecting the at least one modifiable part is further controlled by a determined criteria, said determined criteria being specific to an application.

5. Method according to any of claims 1 to 4 wherein the step (E1) of determining at least one modifiable part in the coded bit-stream further comprises using a watermarking algorithm on the coded bit-stream.

6. Method according to any of claims 1 to 5 wherein the length of the coded bit-stream (Cₒ) and the length of the compliant selectively scrambled bit-stream (C_{S}) are identical.

7. Method according to any of claims 1 to 6 wherein the method further comprises a step of delivering metadata, said metadata comprising the original modifiable part of the coded bit-stream and position in the coded bit-stream for each of the at least one selected modifiable part.

8. Method according to claim 7 wherein the step of delivering metadata further comprises a step (E4) of encrypting metadata.

9. Method according to claim 8 wherein a first set of metadata is encrypted using a first key and a second set of metadata is encrypted with a second key.

10. Method according to any of claims 8 to 9 **characterized in that** the step of delivering metadata comprises a step (E5) of multiplexing metadata into the compliant modified bit-stream (C'_{S}).

11. Method according to claim 10 **characterized in that** the bit-stream is a H.264 coded bit-stream and **in that** the step (E5) of multiplexing comprises insertion of encrypted metadata into SEI message of the compliant modified bit-stream.

12. Method according to any of claims 1 to 11 **characterized in that** the bit-stream is a H.264 CABAC coded bit-stream and **in that** the modifiable part of the bit-stream is a syntax element.

13. Method according to any of claims 1 to 11 **characterized in that** the bit-stream is a H.264 CAVLC coded bit-stream and **in that** the modifiable part of the bit-stream is a syntax element.

14. Method for descrambling a selectively scrambled bit-stream **characterized in that** the selectively scrambled bit-stream comprises at least one modified part wherein said selectively scrambled bit-stream is compliant regarding a coding standard and wherein the rendering of the selectively scrambled bit-stream is perceptually affected compared to the rendering of the descrambled bit-stream, the descrambling method comprising:
- a step (D1) of receiving metadata, said metadata comprising an original part of the bit-stream and a position in the bit-stream for each of the at least one modified part of the selectively scrambled bit-stream;
- a step (D2) of determining the at least one modified part of the selectively scrambled bit-stream according to the received position;
- a step (D3) of substitution of the at least one modified part by the received original part resulting in a descrambled bit-stream.

15. Method according to claim 14 wherein metadata are encrypted **characterized in that** the step (D1) of receiving metadata further comprises a step of decryption of encrypted metadata.
